# EUROPEAN PATENT SPECIFICATION

(11) **EP 3 814 250 B1**
(45) Date of publication and mention of the grant of the patent: **07.06.2023**
(21) Application number: 19827256.9
(22) Date of filing: 25.06.2019
(51) Int. Cl.: B65G 1/07, A47B 9/02, B65D 83/00, B66F 7/06

(54) **AN AUTOMATIC LIFTING DEVICE AND USE THEREOF**
AUTOMATISCHE HEBEVORRICHTUNG UND DEREN VERWENDUNG
DISPOSITIF DE LEVAGE AUTOMATIQUE ET SON UTILISATION

(30) Priority: 27.06.2018 DK PA201800299
(43) Date of publication of application: 05.05.2021
(73) Proprietor: FLEX1ONE A/S, 6650 Brørup (DK)
(72) Inventor: MORTENSEN, Dan, 6270 Tønder (DK); KRISTENSEN, Kenneth, 6600 Vejen (DK)
(74) Representative: Zacco Denmark A/S
(86) International application number: PCT/DK2019/050205
(87) International publication number: WO 2020/001718

(56) References cited:
- EP-A1- 0 017 914
- WO-A1-00/44603
- GB-A- 999 010
- US-A- 2 980 287
- US-A- 3 418 031
- US-A- 3 419 238
- US-A- 3 659 913
- US-A- 3 722 970
- US-A- 3 741 512
- US-A- 3 805 712
- US-A- 4 149 762
- US-A- 4 926 760
- US-A- 4 981 215
- US-A1- 2008 000 393
- US-A1- 2011 309 228

## Description

An automatic lifting device is known, with a frame part comprising a wheel plane at the lower side of which a number of carrying wheels are provided, and a carrying plane guided above the wheel plane in parallel, as well as a parallel guide and springs effective between the wheel plane and the carrying plane, whereby the carrying plane is springily moveable towards the wheel plane in dependence of a load positioned on the carrying plane. US patent no. 4 149 762 shows an example of such a device, where the parallel guide is constituted by a scissor mechanism.

Furthermore, it is known, with lifting devices that have the springs for establishing the lifting positioned in a vertical frame part next to the carrying plane, so that the carrying plane, when it is loaded, will lead to a moment against the vertical frame part housing the springs, and therefore extra reinforcement of the vertical frame part is necessary, and further there is a risk that the moment to be transferred also during motion up and down of the carrying plane relative to a wheel plane, causes the carrying plane to become wedged in a given position. The reason is that the structure necessitates a linear guide of the carrying plane along the vertical frame part.

From US patent no. 3805712 it is known that the parallel guide is arranged so that it comprises linkages located between the wheel plane and the carrying plane, where between the wheel plane and a moment arm suspension springs are arranged. Thus a lifting device is obtained completely without vertical frame parts, the linkages here being arranged so that they ensure the parallel guide of the parallel plane up and down relative to the wheel plane without a risk of wedging. As all movements are hereby realised as swivelling or rotational movements, and there are no linear guides, a reliable device is obtained. However, as the springs according to the US patent document are mounted outside the linkage, a complete collapse of the two planes against each other is prevented.

From GB patent no. 999010 and US patent no. 4 981 215, lifting devices are known, where each linkage comprises two equally long carrying elements, and where such two carrying elements are hinged together along knee hinge lines at their one end and at the opposite ends are hinged to an underlying plane and a carrying plane, respectively, along hinge lines running in parallel with knee hinge lines, where at least two of the linkages have non-parallel running knee hinge lines. In fulfilling the condition of non-parallel running knee hinge lines, parallel guide of the carrying plane towards or away from the underlying plane is ensured, as the parallel orientation of the two planes is maintained by the non-parallel hinge lines preventing the carrying plane, during motion, to tilt about one of the non-parallel rotational axes, constituted by the hinge lines.

It is known from the US 4 981 215 patent document that a hinge pin belongs to each of said hinge lines, which hinge pin defines the rotational axis for the mutually hinged elements.

Finally, the US 3 418 031 A discloses an automatic lifting device according to the preamble of the independent claim 1.

However, none of the stated prior art examples offer suitable arrangement of spring elements.

According to the invention, suitably on the hinge pin for the wheel plane hinge line and the carrying plane hinge line, respectively, a spiral spring for each is mounted with windings running around the hinge pin, so that each spiral spring transfers a lifting moment between the carrying element and the wheel plane and the carrying plane, respectively, which moment is largest when the carrying plane and the wheel plane are closest to each other, and smallest when the distance between the wheel plane and the carrying plane is largest. The spiral spring works by rotation of its endpoints relative to each other, and subsequently enlargement or reduction of the diameter of each winding.

In this manner, it is ensured that the carrying plane is gradually lowered towards the wheel plane as the load on the carrying plane is increased, the spiral springs at the carrying elements' tilting or rotational movements towards the carrying plane and the wheel plane, respectively, are gradually tensioned because their ends are fixing or abutting the carrying element and associated carrying or wheel planes. The spiral winding of the spiral springs are suitably lying around the hinge pin, and the change in diameter that the tensioning causes can easily be contained in a pre-determined oversize of the internal diameter of the windings relative to the external diameter of the hinge pin.

The lifting device preferably comprises four similar linkages, positioned symmetrically in twos opposite each other relative to a joint centre axis for the carrying plane and the wheel plane, respectively, which centre axis travels perpendicularly on the two planes guided in parallel. During normal use on an even horizontal basis, the centre axis of the lifting device will define a vertical axis, and the carrying plane be displaced in case of load along this axis. The four similar linkages form an extremely stable arrangement, and the upward and downward movement of the carrying plane will take place evenly and unobstructed.

Suitably, the wheel plane hinge lines and the carrying plane hinge lines are positioned at a distance from centre axis, so that the knee hinge lines move synchronously inwards towards the centre axis when the two planes during increasing load on the carrying plane approach each other. This ensures that the linkages do not exceed the contour of the two planes during their movements towards and away from each other.

The hinge pin for the wheel plane hinge line and the carrying plane hinge line, respectively, can advantageously be a loose or removable hinge pin that is mounted in eyes belonging to the wheel plane and the carrying plane, respectively, which eyes can be located at either end of a mounted hinge pin. Thus, the hinge pins can at each end be attached to the carrying plane and the wheel plane, respectively, and have a through-going shaft opening of a carrying element located at each eye, as the spiral spring can be mounted in the middle between the through-going shaft openings.

Suitably, on the lower side of the wheel plane four carrying wheels are attached, where each carrying wheel is mounted below their respective wheel plane hinge line. This structure ensures maximum stability, as the weight that is transferred via each hinge pin can be accommodated by a carrying wheel just below the hinge pin.

It is advantageous that both the wheel plane and the carrying plane have a circular contour, as a through-going recess has been made in the planes between the four wheel plane hinge lines and between the four carrying plane hinge lines, which recesses travel from the circular contour and inwards towards the centre axis. The four recesses contribute to ensuring low weight of the unit.

As the wheel plane and the carrying plane in a preferred embodiment are similar and of equal size, these two elements can be manufactured in one and the same casting mould, which contributes to reducing the costs of the unit.

The lifting device is suitably used for being loaded by up to four wheels or tyres stacked flatly on top of the carrying plane and each other, where the resilience of the spiral springs is adjusted so that the tyres or wheels lying on top always are presented ergonomically correct and approximately in the same height position for a user. Thereby increased mobility and better ergonomics are obtained for the work with changing tyres or wheels on vehicles. However, the unit could also be used for other purposes, e.g. on building sites or in other parts of industry.

The invention will be explained further in the following with reference to the drawing, in which:
Fig. 1 shows a 3D representation of the lifting device,
Fig. 2 is a side presentation of the lifting device in Fig. 1,
Fig. 3 shows the lifting device shown in Fig. 2 in a collapsed state
Fig. 4 is a sectional presentation through a lifting device as shown in Fig. 2, but in a cutting plane through two opposite carrying wheels.

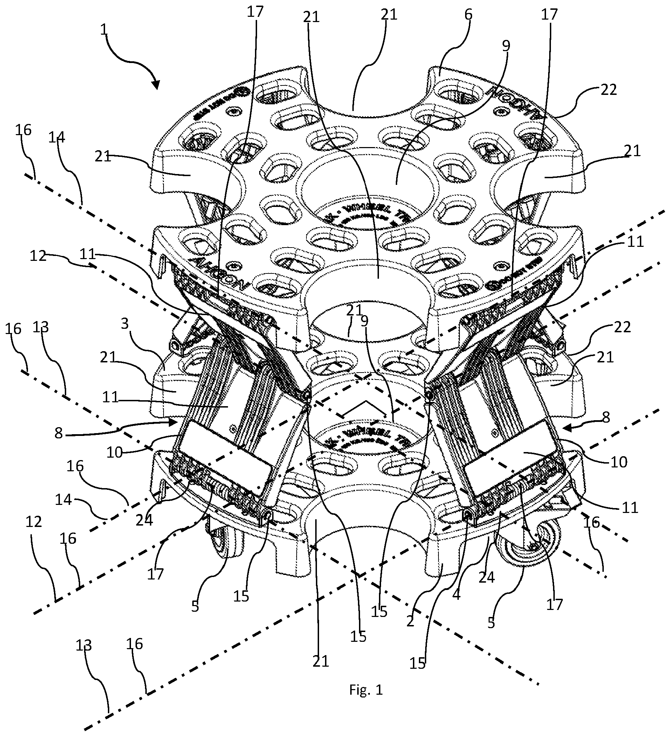

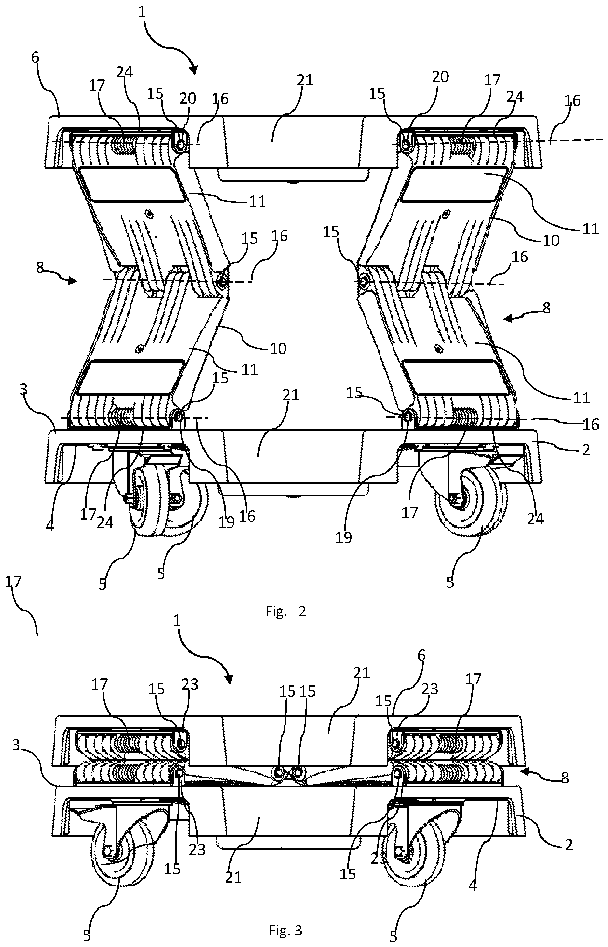

The automatic lifting device 1 shown in a 3D representation in Fig. 1 can be loaded by up to four wheels or tyres stacked flatly on top of the carrying plane 6 and each other (wheels are not shown), the spiral springs' 17 resilience being adjusted so that the uppermost tyre or wheel is always presented in an ergonomically correct position for a user. When four wheels are thus stacked on the carrying plane 6, it will be pressed down towards the wheel plane 3, so that the two planes 6, 3 assume the position shown in Fig. 3 relative to each other. Thereby, the uppermost wheel will still be in correct working height for the mechanic, who will use the wheel. As the wheels are taken from the top, one by one, the uppermost wheel will always be in approximately the same position as the fourth wheel when four wheels are stacked on top of each other. Correspondingly, the lifting device 1 can be loaded with one, two, three or four wheels stacked on top of each other, as the carrying plane and the wheel plane are gradually moved towards each other, while more wheels can continuously be stacked on the wheel plane until the planes, upon the arrival of the fourth wheel, are squeezed together as shown in Fig. 3.

At its lower side 4 the wheel plane 3 has a number of carrying wheels 5. If the lifting device 1 is used for tyres, the springs 17 must be configured with a smaller spring constant than if entire wheels are to be stacked on the carrying plane. It should also be noted that other objects than wheels and tyres could be stacked on the lifting device, e.g. bricks or other building materials that are used gradually and should lie in ergonomically correct positions and be ready for use, both when a stack of materials is completely full and when it is close to being used up.

The parallel guide 8 comprises two or more similar spring-mounted linkages 10 positioned between the wheel plane 3 and the carrying plane 6.

In the embodiment shown, the parallel guide 8 comprises four similar linkages 10, where each linkage 10 comprises two equally long carrying elements 11, and where each such two carrying elements 11 are hinged together along knee hinge lines 12 at their one end and at the opposite ends are hinged to the wheel plane 3 and the carrying plane 6, respectively, along, running in parallel with the knee hinge lines 12, the wheel plane hinge line 13 and the carrying hinge line 14, respectively. The hinge lines are shown in Fig. 1 with dashed lines. For the sake of simplicity, this is not repeated in the other figures. To ensure the functionality of the parallel guide, at least two of the linkages 10 must have non-parallel running kneehinge lines 12. As appears from Fig. 1, the two knee hinge lines 12, which are visible in the figure, are located along rotational axes 16, forming a right angle with each other, shown by dashed lines through the two rotational axes 16.

A hinge pin 15 that defines the rotational axis 16 for the mutually hinged elements belongs to each of said hinge lines 12, 13, 14. The rotational axis 16 and the hinge lines coincide, the hinge pin 15 being the physical element about which each carrying element rotates, and the rotational axis and the hinge line are the centre of the rotation that the element carries out about the hinge pin 15. On the hinge pin 15 for the wheel plane hinge line 13 and the carrying plane hinge line 14, respectively, each have a spiral spring 17 mounted with windings running around the hinge pin 15. Thereby each spiral spring 17 can transfer a lifting moment between the carrying element 11 and the wheel plane 3 and the carrying plane 6, respectively. As the spiral spring is mounted so that it is gradually tensioned when the carrying elements 11 are folded up against each other, the moment will be largest when the carrying plane 6 and the wheel plane 3 are closest to each other, and smallest when the distance between the wheel plane 3 and the carrying plane 6 is largest. The tension can be increased by increasing or reducing the individual windings of the spiral in diameter.

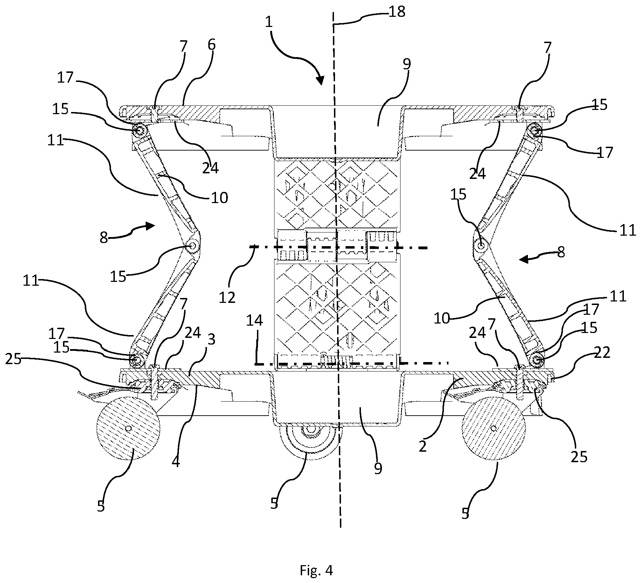

The lifting device 1 comprises four similar linkages 10, positioned symmetrically in twos opposite each other relative to a joint centre axis 18 for the carrying plane 3 and the wheel plane 6, respectively. The centre axis 18 travels perpendicularly to the two planes 3,6 guided in parallel. Note that the lifting device could function with 2, 3, 4 or more linkages between the wheel plane 3 and the carrying plane 6. To obtain even load of each hinge pin 15, it is advantageous that the linkages 10 are positioned at equidistant angle distances between them relative to the centre axis 18 (indicated in Fig. 4). In the shown embodiment of the invention, the angle between two adjacent linkages 10 is 90°.

It also appears from Fig. 1 that the wheel plane hinge lines 14 and the carrying plane hinge lines 13 are positioned at a distance from the centre axis 18, so that the knee hinge lines 12 move synchronously inwards towards the centre axis 18 when the two planes, the carrying plane 3 and the wheel plane 6, during increasing load on the carrying plane 6 approach each other.

Preferably, the hinge pin 15 for the wheel plane hinge line 13 and the carrying plane hinge line 14, respectively, is a loose or removable hinge pin 15 that is mounted in eyes 19, 20 (only indicated in Fig. 2) belonging to the wheel plane 3 and the carrying plane 6, respectively, which eyes 19,20 are located at either end of a mounted hinge pin 15. This structure provides even load of each hinge pin 15 and associated eyes. The eyes 19, 20 are formed in metal fittings 24, which again are mounted to the top side of the wheel plane 3 and the lower side of the carrying plane 6. Otherwise the metal fittings 24 are identical and each retained to their respective planes by one or more simple standard screws 7. As also appears from Fig. 4, the screws 7 in respect of the wheel plane are also retaining screws for the fixture 25 (indicated in Fig. 4), which constitutes the wheel suspension and the attachment of the suspension in the wheel plane 3. It should be noted that the metal fitting 24 is very simple and comprises a flat plate part with a bent fishplate 23 (indicated in Fig. 3) at either end, in which the eye 19, 20 (indicated in Fig. 2) for the hinge pin 15 is punched out.

As appears from the figures, on the lower side 4 of the wheel plane 3, four carrying wheels 5 are attached, and here each carrying wheel 5 is mounted below their respective wheel plane hinge line 13. This offers maximum stability for the lifting device 1, as the force from the carrying plane 6, due to the weight of e.g. car or truck wheels thereon, is transferred downwards via the hinge pins 15, and where a hinge pin 15 will thus be mounted in a fitting with eyes 19, 20 directly above each carrying wheel 5. The carrying wheels 5 are so-called "castor wheels", which are characterized by, in their suspension or fixture 25, being rotatable about a vertical axis. The lifting device 1 thereby becomes extremely mobile and could be driven in any direction on a plane base. Two or more of the carrying wheels 5 can be provided with a disengageable braking device, so that the lifting device 1 can be parked stably in a desired place.

It appears from Fig. 1 that both the wheel plane 3 and the carrying plane 6 have a circular contour 22 (indicated in Fig. 1). This is in accordance with the primary field of invention of the device 1 according to the embodiment described which is to keep and transport up to four tyres or wheels on top of each other. The circular contour 22 therefore has a diameter, which is not substantially smaller than the diameter of usual tyres or wheels for e.g. passenger cars. However, the lifting device can obviously be scaled both upwards and downwards and e.g. be manufactured in a larger or smaller version depending on the type of wheel or other elements with which it is arranged to be loaded. In each of the planes 3, 6, a through-going recess 21 has been made between both the four wheel plane hinge lines 13 and between the four carrying plane hinge lines 14, where the recesses 21 travel from the circular contour and inwards towards the centre axis 18. The recesses 21 have a number of advantages, for instance users of the device can put a foot in the recess for the wheel plane and thereby obtain a better ergonomic working position, when the device is to be loaded or unloaded. Moreover, several devices could be stacked in a collapsed state (shown in Fig. 3), the carrying wheels being able to go down into recesses 21 in an underlying carrying plane 3, so that the stack becomes stable and not unnecessarily tall. Furthermore, the recess 21 in the carrying plane will allow a user to grip at the lower side of a wheel here, either during loading or unloading of the lifting device 1.

Note that the wheel plane 3 and the carrying plane 6 here are similar and of the same size, so that these two elements can be cast in one and the same casting mould. In the middle of both one and the other of the two planes 3, 6, a bowl 9 is formed, and as illustrated in Fig. 1, it is round, and Fig. 2 shows that the bowl 9 has conical sides, so that a bottom part of it, extending downwards past the lower extent of the carrying plane 6 or the wheel plane 3 could otherwise be accommodated in an abutting bowl's 6 upwards facing opening at collapsing of a lift device's carrying plane 6 and wheel plane 3, or by stacking of thus collapsed lifting devices 1 on top of each other.

Likewise, all carrying elements 11 here are similar and of equal size and can thereby be cast in one and the same casting mould, either in plastic or light metal depending on the strength requirements. Each carrying element 11 moreover comprises a square plate, with shaft openings travelling in parallel at two opposite edge parts. At the one edge part, the shaft opening is positioned at either abutting side, so that a central area can be kept free, as this area holds the spiral spring 17, which is also mounted on the hinge pin 15. The shaft openings in the carrying element 11, the hinge pin 15 and the eyes 19, 20 in the metal fitting 24 together constitute the hinge that allows a carrying element 11 to tilt around the carrying plane hinge line 14 and the wheel plane hinge line 13, respectively, and at the same time the carrying elements 11 form linkages 10 in twos, so that they can fold around the knee hinge lines 12 in pairs.

### List of reference numerals

1. Lifting device
2. Frame part
3. Wheel plane
4. Lower side of the wheel plane
5. Carrying wheels
6. Carrying plane
7. Screws
8. Parallel guide
9. Bowl
10. Linkages
11. Carrying element
12. Knee hinge line
13. Wheel plane hinge line
14. Carrying plane hinge line
15. Hinge pin
16. Rotational axis
17. Spiral spring
18. Centre axis
19. Eyes for wheel plane
20. Eyes for carrying plane
21. Through-going recess
22. Circular contour
23. Bent fishplate
24. Metal fittings
25. Fixture

## Claims

1. An automatic lifting device with a frame part (2), comprising a wheel plane (3) at the lower side (4) of which a number of carrying wheels (5) are provided and, above the wheel plane (3), a carrying plane (6) guided in parallel herewith, as well as a parallel guide (8) and springs effective between the wheel plane (3) and the carrying plane (6), whereby the carrying plane (6) is springily movable towards the wheel plane (3) in dependence of a load positioned on the carrying plane (6), where the parallel guide (8) comprises two or more spring-mounted linkages (10) arranged between the wheel plane (3) and the carrying plane (6) and where each linkage (10) comprises two carrying elements (11), and where such two carrying elements (11) are hinged together along knee hinge lines (12) at one end of them, and at the opposite ends are hinged to the wheel plane (3) and the carrying plane (6), respectively, along, running in parallel with the knee hinge lines (12), a wheel plane hinge line (13) and a carrying plane hinge line (14), respectively, where at least two of the linkages (10) have non-parallel running knee hinge lines (12), as each of said hinge lines (12, 13, 14) are associated with a hinge pin (15), which hinge pin (15) defines the rotational axis (16) for the mutually hinged elements, **characterized in that** on the hinge pin (15) for the wheel plane hinge line (13) and the carrying plane hinge line (14), respectively, a spiral spring (17) for each is mounted with windings running around the hinge pin (15), so that each spiral spring (17) transfers a lifting moment between the carrying element (11) and the wheel plane (3) and the carrying plane (6), respectively, which moment is largest when the carrying plane (3) and the wheel plane (6) are closest to each other, and smallest when the distance between the wheel plane (3) and the carrying plane (6) is largest.

2. An automatic lifting device (1) according to claim 1 **characterized in that** the lifting device (1) comprises four similar linkages (10), arranged symmetrically in twos opposite each other relative to a joint centre axis (18) for the carrying plane (6) and the wheel plane (3), respectively, which centre axis (18) travels perpendicularly on the two planes guided in parallel (3,6).

3. An automatic lifting device (1) according to claim 2, **characterized in that** the wheel plane hinge lines (13) and the carrying plane hinge lines (14) are arranged at a distance from the centre axis (18), so that the knee hinge lines (12) move synchronously inwards towards the centre axis (18) when the two planes (3,6) during increasing load on the carrying plane (6) approach each other.

4. An automatic lifting device (1) according to claim 1 **characterized in that** the hinge pin (15) for the wheel plane hinge line (13) and the carrying plane hinge line (14), respectively, is a removable hinge pin (15) and is mounted in eyes (19,20) associated with the wheel plane (3) and the carrying plane (6), respectively, which eyes (19,20) are located at either end of a mounted hinge pin (15).

5. An automatic lifting device according to one or more of claims 1 to 4, **characterized in that** on the lower side (4) of the wheel plane (3) four carrying wheels (5) are attached, where each carrying wheel (5) is mounted below the wheel plane hinge line (13) of each.

6. An automatic lifting device according to one or more of claims 2 to 5, **characterized in that** both the wheel plane (3) and the carrying plane (6) have a circular contour, as in the planes (3,6) a through-going recess (21) has been made between the four wheel plane hinge lines (13) and between the four carrying plane hinge lines (14), which recesses (21) travel from the circular contour and inwards towards the centre axis (18).

7. An automatic lifting device according to one or more of claims 1 to 6 **characterized in that** the wheel plane (3) and the carrying plane (6) are similar and of the same size.

8. Use of an automatic lifting device (1) according to one or more of claims 1 to 7, **characterized in that** the lifting device (1) is loaded with up to four wheels or tyres stacked flatly on top of the carrying plane (6) and each other, where the resilience of the spiral springs (17) is adjusted so that the uppermost tyres or wheels are always presented in approximately the same height position for a user.

## Patentansprüche

1. Automatische Hebevorrichtung mit einem Rahmenteil (2), umfassend eine Radebene (3), an deren unteren Seite (4) eine Anzahl von Stützrädern (5) vorgesehen sind, oberhalb der Radebene (3), eine Stützebene (6), die hiermit parallel geführt ist, sowie eine parallele Führung (8) und Federn, die zwischen der Radebene (3) und der Stützebene (6) wirksam sind, wodurch die Stützebene (6) abhängig von einer auf der Stützebene (6) positionierten Belastung gegen die Radebene (3) federnd beweglich ist, wobei die parallele Führung (8) zwei oder mehrere federmontierte Verknüpfungen (10) umfasst, die zwischen der Radebene (3) und der Stützebene (6) angeordnet sind, und wobei jede Verknüpfung (10) zwei Stützelemente (11) umfasst, und wobei solche zwei Stützelemente (11) entlang Kniescharnierlinien (12) an einem Ende davon gelenkig miteinander verbunden sind und an den entgegengesetzten Enden jeweils mit der Radebene (3) und der Stützebene (6) gelenkig verbunden sind, entlang, parallellaufend mit den Kniescharnierlinien (12), jeweils eine Radebenescharnierlinie (13) und eine Stützebenescharnierlinie (14), wobei mindestens zwei der Verknüpfungen (10) nicht-parallellaufende Kniescharnierlinien (12) aufweisen, indem jede der Scharnierlinien (12, 13, 14) mit einem Scharnierstift (15) verknüpft sind, welcher Scharnierstift (15) die Drehachse (16) für die gegenseitig gelenkig verbundenen Elemente definiert, **dadurch gekennzeichnet, dass,** auf dem Scharnierstift (15) für jeweils die Radebenescharnierlinie (13) und die Stützebenescharnierlinie (14), eine Spiralfeder (17) für jede mit Wicklungen um den Scharnierstift (15) herum montiert ist, so dass jede Spiralfeder (17) ein Hebemoment zwischen jeweils dem Stützelement (11) und der Radebene (3) und der Stützebene (6) überträgt, welches Moment am größten ist, wenn die Stützebene (3) und die Radebene (6) einander am nächsten ist, und am kleinsten ist, wenn der Abstand zwischen der Radebene (3) und der Stützebene (6) am größten ist.

2. Automatische Hebevorrichtung (1) nach Anspruch 1, **dadurch gekennzeichnet, dass** die Hebevorrichtung (1) vier ähnliche Verknüpfungen (10) umfasst, die in Zweien einander gegenüberliegend im Verhältnis zu einer Verbindungsstellemittelachse (18) für jeweils die Stützebene (6) und die Radebene (3) symmetrisch angeordnet sind, welche Mittelachse (18) sich senkrecht auf den zwei Ebenen (3,6), die parallel geführt werden, bewegt.

3. Automatische Hebevorrichtung (1) nach Anspruch 2, **dadurch gekennzeichnet, dass** die Radebenescharnierlinien (13) und die Stützebenescharnierlinien (14) in einem Abstand von der Mittelachse (18) angeordnet sind, so dass die Kniescharnierlinien (12) sich synchron nach innen gegen die Mittelachse (18) bewegen, wenn die zwei Ebenen (3,6) während einer steigenden Belastung auf der Stüztebene (6) sich einander nähern.

4. Automatische Hebevorrichtung (1) nach Anspruch 1, **dadurch gekennzeichnet, dass** der Scharnierstift (15) für jeweils die Radebenescharnierlinie (13) und die Stützebenescharnierlinie (14) ein entfernbarer Scharnierstift (15) ist und in Ösen (19,20) montiert ist, die mit jeweils der Radebene (3) und der Stützebene (6) verknüpft sind, welche Ösen (19,20) an einem Ende eines montierten Scharnierstifts (15) angeordnet sind.

5. Automatische Hebevorrichtung nach einem oder mehreren der Ansprüche 1 bis 4, **dadurch gekennzeichnet, dass** vier Stützräder (5) auf der unteren Seite (4) der Radebene (3) befestigt sind, wo jedes Stützrad (5) unterhalb der Radebenescharnierlinie (13) von jedem montiert ist.

6. Automatische Hebevorrichtung nach einem oder mehreren der Ansprüche 2 bis 5, **dadurch gekennzeichnet, dass** sowohl die Radebene (3) als auch die Stützebene (6) eine kreisförmige Kontur aufweisen, da eine durchgehende Ausnehmung (21) in den Ebenen (3,6) hergestellt ist zwischen den vier Radebenescharnierlinien (13) und zwischen den vier Stützebenescharnierlinien (14), welche Ausnehmungen (21) sich von der kreisförmigen Kontur und nach innen gegen die Mittelachse (18) bewegen.

7. Automatische Hebevorrichtung nach einem oder mehreren der Ansprüche 1 bis 6, **dadurch gekennzeichnet, dass** die Radebene (3) und die Stützebene (6) ähnlich und gleich groß sind.

8. Anwendung einer automatischen Hebevorrichtung (1) nach einem oder mehreren der Ansprüche 1 bis 7, **dadurch gekennzeichnet, dass** die Hebevorrichtung (1) mit bis zu vier Rädern oder Reifen geladen ist, die oben auf der Stützebene (6) und einander flach gestapelt sind, wobei die Nachgiebigkeit der Spiralfedern (17) so eingestellt ist, dass die obersten Reifen oder Räder immer ungefähr in der gleichen Höhe für einen Benutzer dargestellt werden.

## Revendications

1. Dispositif de levage automatique comprenant une partie de cadre (2), comprenant un plan de roue (3) au niveau du côté inférieur (4) duquel un certain nombre de roues porteuses (5) sont disposées et, au-dessus du plan de roue (3), un plan de transport (6) y guidé en parallèle, ainsi qu'un guide parallèle (8) et des ressorts efficaces entre le plan de roue (3) et le plan de transport (6), le plan de transport (6) étant mobile de manière élastique vers le plan de roue (3) en fonction d'une charge positionnée sur le plan de transport (6), le guide parallèle (8) comprenant au moins deux liaisons montées sur ressort (10) disposées entre le plan de roue (3) et le plan de support (6), et chaque liaison (10) comprenant deux éléments de support (11), et de tels deux éléments de support (11) étant articulés ensemble le long de lignes de charnière de genou (12) à une extrémité de ceux-ci, et aux extrémités opposées étant articulés respectivement au plan de roue (3) et au plan de support (6) le long, s'étendant parallèlement aux lignes de charnière de genou (12), respectivement d'une ligne de charnière de plan de roue (13) et d'une ligne de charnière de plan de transport (14), au moins deux des liaisons (10) présentant des lignes de charnière de genou (12) non parallèles, chacune desdites lignes de charnière (12, 13, 14) étant associée à une broche de charnière (15), ladite broche de charnière (15) définissant l'axe de rotation (16) pour les éléments mutuellement articulés, **caractérisé en ce que** sur la broche de charnière (15) respectivement pour la ligne de charnière de plan de roue (13) et la ligne de charnière de plan de transport (14), est monté un ressort en spirale (17) pour chacun avec des enroulements s'étendant autour de la broche de charnière (15), de telle sorte que chaque ressort en spirale (17) transfère un moment de levage entre l'élément de transport (11) et respectivement le plan de roue (3) et le plan de transport (6), lequel moment est le plus grand lorsque le plan de transport (3) et le plan de roue (6) sont les plus proches l'un de l'autre, et plus petit lorsque la distance entre le plan de roue (3) et le plan de transport (6) est la plus grande.

2. Dispositif de levage automatique (1) selon la revendication 1 **caractérisé en ce que** le dispositif de levage (1) comprend quatre liaisons similaires (10), disposées symétriquement par deux opposées l'une à l'autre par rapport à un axe central commun (18) respectivement pour le plan porteur (6) et le plan de roue (3), dont l'axe central (18) se déplace perpendiculairement sur les deux plans guidés parallèlement (3,6).

3. Dispositif de levage automatique (1) selon la revendication 2, **caractérisé en ce que** les lignes de charnière de plan de roue (13) et les lignes de charnière de plan de transport (14) sont disposées à une certaine distance de l'axe central (18), de telle sorte que les lignes de charnière de genou (12) se déplacent de manière synchrone vers l'intérieur vers l'axe central (18) lorsque les deux plans (3,6) pendant l'augmentation de charge sur le plan de transport (6) se rapprochent l'un de l'autre.

4. Dispositif de levage automatique (1) selon la revendication 1 **caractérisé en ce que** la broche de charnière (15) respectivement pour la ligne de charnière de plan de roue (13) et la ligne de charnière de plan de transport (14) est une broche de charnière amovible (15) et est montée dans des yeux (19, 20) associés respectivement au plan de roue (3) et au plan de transport (6), lesquels yeux (19, 20) sont situés à chaque extrémité d'une broche de charnière montée (15).

5. Dispositif de levage automatique selon une ou plusieurs des revendications 1 à 4,
**caractérisé en ce que** sur le côté inférieur (4) du plan de roue (3) sont fixées quatre roues porteuses (5), chaque roue porteuse (5) étant montée sous la ligne d'articulation du plan de roue (13) de chacun.

6. Dispositif de levage automatique selon une ou plusieurs des revendications 2 à 5,
**caractérisé en ce qu'à** la fois le plan de roue (3) et le plan de support (6) ont un contour circulaire, comme dans les plans (3,6), un évidement traversant (21) a été réalisé entre les quatre lignes d'articulation de plan de roue (13) et entre les quatre lignes d'articulation de plan de support (14), lesdits évidements (21) se déplaçant à partir du contour circulaire et vers l'intérieur vers l'axe central (18).

7. Dispositif de levage automatique selon une ou plusieurs des revendications 1 à 6,
**caractérisé en ce que** le plan de roue (3) et le plan de support (6) sont similaires et de même dimension.

8. Utilisation d'un dispositif de levage automatique (1) selon une ou plusieurs des revendications 1 à 7, **caractérisé en ce que** le dispositif de levage (1) est chargé avec jusqu'à quatre roues ou pneus empilés à plat sur le plan porteur (6) et l'un à l'autre, l'élasticité des ressorts hélicoïdaux (17) étant ajustée de sorte que les pneus ou les roues les plus hauts soient toujours présentés approximativement dans la même position de hauteur pour un utilisateur.
